(19) Europäisches Patentamt
European Patent Office
Office européen des brevets

(11) **EP 4 742 408 A1**

## (12) EUROPEAN PATENT APPLICATION

(43) Date of publication:
**13.05.2026 Bulletin 2026/20**

(21) Application number: **25210271.0**

(22) Date of filing: **22.10.2025**

(51) International Patent Classification (IPC):
*H01M 50/403* (2021.01)  *H01M 50/434* (2021.01)
*H01M 50/443* (2021.01)  *H01M 50/451* (2021.01)
*H01M 50/489* (2021.01)

(52) Cooperative Patent Classification (CPC):
**H01M 50/434; H01M 50/403; H01M 50/443;
H01M 50/451; H01M 50/489;** H01M 2220/10;
H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 KR 20240156768**

(71) Applicant: **SK IE Technology Co., Ltd.**
**Seoul 03161 (KR)**

(72) Inventors:
• **YUN, Cheol Min**
**34124 Daejeon (KR)**
• **KIM, Dong Jae**
**34124 Daejeon (KR)**
• **OH, Eun Ji**
**34124 Daejeon (KR)**
• **JUNG, Hee Joon**
**34124 Daejeon (KR)**

(74) Representative: **Prüfer & Partner mbB**
**Patentanwälte · Rechtsanwälte**
**Sohnckestraße 12**
**81479 München (DE)**

## (54) COMPOSITE SEPARATOR AND ELECTROCHEMICAL DEVICE INCLUDING THE SAME, AND MANUFACTURING METHOD OF SAID COMPOSITE SEPARATOR

(57) Provided is a composite separator including: a porous substrate; and a ceramic layer which is formed on one or both surfaces of the substrate and includes inorganic particles and a binder, wherein the inorganic particles have an average particle diameter (D50) of 0.20 $\mu$m to 0.40 $\mu$m and have a ratio (A/B) between an area (A) of a small particle diameter side and an area (B) of a large particle diameter side of 1.05 or more based on a maximum peak in a particle size distribution diagram of the inorganic particles. The composite separator may satisfy all of excellent mechanical and thermal stability and excellent ion conduction properties.

FIG. 1

EP 4 742 408 A1

## Description

### TECHNICAL FIELD

The present disclosure relates to a composite separator and an electrochemical device including the same. The present disclosure further relates to a method of manufacturing a composite separator, and to a use of inorganic particles having certain size characteristics in a ceramic layer to be disposed on a porous substrate.

### BACKGROUND

In recent years, as an electrochemical device gradually has a higher capacity and higher output, there is a growing demand for securing heat resistance and safety, and in particular, to this end, the required performance for a separator acting as a very important element is being advanced.

For example, as a method for securing heat resistance and safety of a separator, a composite separator to which a coating layer is introduced that includes inorganic particles such as alumina ($Al_2O_3$), silica ($SiO_2$), and zirconia ($ZrO_2$), as well as a binder on a porous substrate has been established as an important technology. Recently, research is conducted aiming for thinning of the separator for the high capacity and high output characteristics of an electrochemical device. Yet, it is difficult to achieve sufficient heat resistance for the thickness range of the thinned inorganic particle coating layer and when heat resistance is intended to be improved, adhesive strength and/or air permeability is deteriorated.

[Related Art]

[Patent Document]

KR 10-2023-0144943 A (October 17, 2023)

### SUMMARY

An embodiment of the present invention is directed to providing a composite separator including: a porous substrate; and a ceramic layer which is formed on one or both surfaces of the porous substrate and has pores formed between inorganic particles which are connected and fixed by a binder, wherein the composite separator has both excellent heat resistance and adhesive strength. Surprisingly, this can be achieved even though the thickness of the ceramic layer in the separator is thin, as disclosed herein.

Another embodiment of the present invention is directed to providing an electrochemical device having excellent battery performance and safety by employing the composite separator.

In one general aspect, a composite separator includes: a porous substrate; and a ceramic layer which is formed on one or both surfaces of the substrate and includes inorganic particles and a binder, wherein the inorganic particles have an average particle diameter (D50) of 0.20 $\mu$m to 0.40 $\mu$m and have a ratio (A/B) between an area (A) of a small particle diameter side and an area (B) of a large particle diameter side of 1.05 or more based on a maximum peak in a particle size distribution diagram of the inorganic particles.

The inorganic particles may satisfy a (D95-D50)/D50 value of 1.8 to 2.5 in the particle size distribution diagram.

The ratio (A/B) between the area (A) of the small particle diameter side and the area (B) of the large particle diameter may satisfy 1.05 to 1.3 based on the maximum peak in the particle size distribution diagram of the inorganic particles.

The composite separator according to an exemplary embodiment may include 0.1 to 10 parts by weight of the binder with respect to 100 parts by weight of the inorganic particles.

The inorganic particles may be one or two or more selected from boehmite, $BaSO_4$, $CeO_2$, $MgO$, $CaO$, $ZnO$, $Al_2O_3$, $SiO_2$, $TiO_2$, $BaTiO_3$, $HfO_2$, $SrTiO_3$, $SnO_2$, $NiO$, $ZrO_2$, $Y_2O_3$, and $SiC$.

The binder may be one or two or more selected from (meth)acryl-based polymers, fluorine-based polymers, styrene-based polymers, vinylalcohol-based polymers, vinylester-based polymers, vinylpyrrolidone-based polymers, cellulose-based polymers, polyimide-based polymers, polyamide-based polymers, polyalkylene glycol, copolymers thereof, and heteropolymer blends thereof.

The binder may include polyacrylamide, carboxymethyl cellulose, or a combination thereof.

The binder may include carboxymethyl cellulose having a weight average molecular weight of 180,000 or more and a degree of substitution of 0.6 to 1.2.

The porous substrate may be hydrophilically surface-treated. Specifically, the porous substrate may comprise at least one polar functional group introduced through hydrophilic surface treatment, the polar functional group being selected from any one or more of a carboxyl group, an aldehyde group, a hydroxyl group, a carbonyl group, an amino group. The hydrophilic surface treatment may preferably be a corona discharge treatment or a plasma discharge treatment, or a combination thereof.

A coating density of the ceramic layer may be 1.2 to 1.8 g/cm$^3$.

The total thickness of the ceramic layer may be 0.5 μm to 10 μm. Preferably, the total thickness of the ceramic layer may be more than 0.5 μm and less than 5 μm. More preferably, the total thickness of the ceramic layer may be more than 0.5 μm and less than 3 μm.

A thickness of the composite separator according to an exemplary embodiment may be 1 to 100 μm.

When the composite separator according to an exemplary embodiment is subjected to a cardboard test and a degree of foreign matter smeared on a surface of a cardboard is evaluated, a ratio of an area occupied by the smeared foreign matter to an area of the cardboard may be 5% or less:

[Cardboard test]

A black cardboard and a rubber pad having a size of 2 cm × 10 cm are sequentially placed on a ceramic layer of a composite separator specimen having a size of 5 cm × 10 cm, the cardboard is pulled out horizontally at a speed of 0.1 m/s for a distance of 60 mm while a force of 10 N is applied to the rubber pad using a pressing device, and a degree of foreign matter smeared on the surface of the cardboard is tested.

The composite separator may have heat shrinkage rates in MD and TD which are measured after the composite separator is allowed to stand at 150°C for 60 minutes, of both 4% or less. another general aspect, a method for manufacturing a composite separator comprises: applying a coating slurry containing inorganic particles and a binder on one or both surfaces of a porous substrate, preferably via bar coating; and drying of the applied coating slurry, the inorganic particles having an average particle diameter (D50) of 0.2 μm to 0.4 μm and satisfying a ratio (A/B) between an area (A) of a small particle diameter side and an area (B) of a large particle diameter side of 1.05 or more based on a maximum peak in a particle size distribution diagram of the inorganic particles. Preferably, drying of the applied coating slurry is carried out at a temperature range of 25 to 50 °C, and the method may preferably further comprise an initial step of introducing at least one polar functional group on one or both surfaces of the porous substrate through hydrophilic surface treatment, wherein optionally the at least one polar functional group are selected from any one or more of a carboxyl group, an aldehyde group, a hydroxyl group, a carbonyl group, an amino group. The hydrophilic surface treatment may specifically be a corona discharge treatment or a plasma discharge treatment, or a combination thereof. Further preferred embodiments of the inorganic particles and of the binder used in the method according to this aspect are as described above and elsewhere in the present disclosure.

Another general aspect relates to the use of inorganic particles, which have an average particle diameter (D50), measured via laser diffraction, of 0.20 μm to 0.40 μm and which have a ratio (A/B) between an area (A) of a small particle diameter side and an area (B) of a large particle diameter side of 1.05 or more based on a maximum peak in a particle size distribution diagram of the inorganic particles, in the formation of a ceramic layer on one or both surfaces a porous substrate, optionally to produce a separator. The ceramic layer may optionally further comprise a binder.

Further preferred embodiments of the inorganic particles and of the binder for use according to this aspect are as described above and elsewhere in the present disclosure.

The use according to this aspect can achieve improved technical effects, such as excellent adhesive strength between inorganic particles in the ceramic layer as well as adhesive strength between the interfaces of the substrate and the ceramic layer, and further excellent heat resistance, and effectively suppressing a heat shrinkage phenomenon.

The improved adhesive strength can be determined by providing a porous substrate on whose one or both surface(s) the ceramic layer is(are) formed, and then according to an exemplary embodiment this formed composite substrate is subjected to the correspondingly performed cardboard test and a degree of foreign matter smeared on a surface of a cardboard is evaluated, a ratio of an area occupied by the smeared foreign matter to an area of the cardboard may be 5% or less, specifically 4% or less, 3% or less, or 2.5% or less, respectively measured at an ambient temperature.

The improved heat shrinkage suppression can be determined by providing a porous substrate on whose one or both surface(s) the ceramic layer is(are) formed, and then according to an exemplary embodiment this formed composite substrate is subjected to a heat shrinkage test wherein the composite substrate has heat shrinkage rates in the machine direction (MD) and the transverse direction (TD), which are measured after the composite substrate is allowed to stand at 150°C for 60 minutes, of both 4% or less.

The composite separator may be included in an electrochemical device which further comprises a positive electrode, a negative electrode, and a composite separator, wherein the composite separator includes: a porous substrate, and a ceramic layer which is formed on one or both surfaces of the substrate and includes inorganic particles and a binder, and the inorganic particles have an average particle diameter (D50) of 0.2 μm to 0.4 μm and satisfy a ratio (A/B) between an area (A) of a small particle diameter side and an area (B) of a large particle diameter side of 1.05 or more based on a maximum peak in a particle size distribution diagram of the inorganic particles. Further preferred embodiments of the inorganic particles and of the binder for the composite separator included in an electrochemical device are as described above and elsewhere in the present disclosure.

The electrochemical device may be a secondary lithium battery.

In still another general aspect, the electrochemical device may be used in electric vehicles, battery charging stations, and solar power generations and wind power generations.

Other features and aspects will be apparent from the following detailed description, the drawings, and the claims.

**BRIEF DESCRIPTION OF THE DRAWINGS**

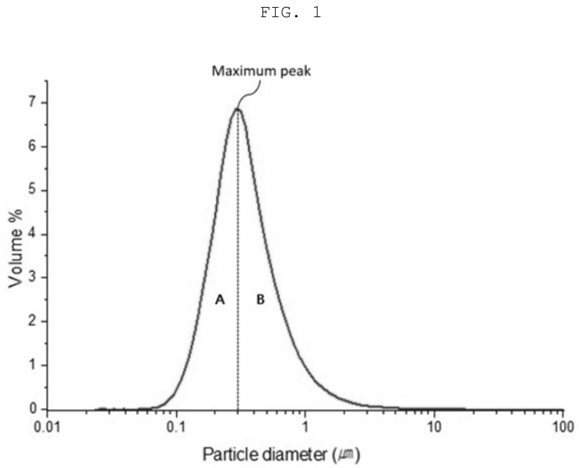

FIG. 1 is a particle size distribution diagram of inorganic particles used in Example 1.

**DETAILED DESCRIPTION OF EMBODIMENTS**

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "include", "equipped", "contain", or "have" does not mean the exclusion of any other constituent element, but mean further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

Hereinafter, the present disclosure will be described in detail. However, it is only illustrative, and the present disclosure is not limited to the specific exemplary embodiment which is illustratively described.

As a conventional technology, a method for introducing inorganic particles having a specific size or less has been suggested in order to solve a heat resistance degradation problem due to the thinning of a composite separator including a porous substrate and an inorganic coating layer. However, in the method, heat resistance was slightly improved, but adhesive strength between inorganic particles and between inorganic particles and the substrate was reduced, and air permeability was deteriorated, and when the adhesive strength and/or air permeability are/is intended to be improved, heat resistance was deteriorated again.

The present inventors found that a composite separator including a porous substrate; and a ceramic layer which is formed on one or both surfaces of the substrate and includes inorganic particles and a binder may satisfy heat resistance, adhesive strength, and air permeability characteristics simultaneously even in a thinned thickness range, when the inorganic particles satisfy an average particle diameter in a specific range and have specific particle size distribution characteristics.

The present disclosure provides a composite separator which may secure excellent mechanical and thermal stability and ion conduction properties simultaneously.

The composite separator according to an exemplary embodiment includes: a porous substrate; and a ceramic layer which is formed on one or both surfaces of the substrate and includes inorganic particles and a binder, wherein the inorganic particles have an average particle diameter (D50) of 0.20 $\mu$m to 0.40 $\mu$m and have a ratio (A/B) between an area (A) of a small particle diameter side and an area (B) of a large particle diameter side of 1.05 or more based on a maximum peak in a particle size distribution diagram of the inorganic particles.

Since the composite separator according to an exemplary embodiment has a particle size distribution characteristics of a ratio (A/B) between an area (A) of a small particle diameter side and an area (B) of a large particle diameter side of 1.05 or more based on a maximum peak in a particle size distribution diagram of the inorganic particles while having an average particle diameter of 0.20 $\mu$m to 0.40 $\mu$m, it may also have excellent heat resistance. In addition, since the composite separator according to an exemplary embodiment may implement excellent adhesive strength and heat resistance even when the ceramic layer is formed at a very small thickness - such that the total thickness of the ceramic layer may be smaller than 10 $\mu$m, for instance 5 $\mu$m or less or even 3 $\mu$m or less - which in turn allows a total thickness of the composite separator according to an exemplary embodiment to be in a range of up to 100 $\mu$m only.

**[0040]** , an electrochemical device employing the separator may satisfy operational safety, a high capacity, and high output characteristics simultaneously.

In an exemplary embodiment, the average particle diameter (D50) of the inorganic particles may refer to a particle diameter of inorganic particles corresponding to 50% as a volume-based cumulative fraction and may be calculated from a particle size distribution diagram measured using a laser diffraction method, typically in accordance with the standard of ISO 13320-1.

In an exemplary embodiment, the particle size distribution diagram may be a graph of volume% depending on the particle diameter of inorganic particles. In an exemplary embodiment, based on a particle size distribution diagram drawn in order of particle diameter from small to large from left to right of the x-axis, the area (A) of the small particle diameter side is an area from a starting point to the x-axis of the maximum peak and may refer to a left area based on the maximum peak, and the area (B) of the large particle diameter side is an area from the x-axis of the maximum peak to the end point of the particle size distribution diagram and may refer to a right area based on the maximum peak.

In an exemplary embodiment, the ratio (A/B) between the area (A) of the small particle diameter side and the area (B) of the large particle diameter side may be 1.05 or more, 1.06 or more, 1.07 or more, 1.5 or less, 1.4 or less, 1.3 or less, or 1.2 or less, may be 1.05 to 1.5, 1.05 to 1.3, or 1.06 to 1.3, based on the maximum peak in the particle size distribution diagram of the inorganic particles and may include all possible combinations of the upper limits and the lower limits of the numerical ranges.

In an exemplary embodiment, the inorganic particles may have a (D95-D50)/D50 value of 1.5 or more, 1.7 or more, 1.8 or more, 3.0 or less, 2.8 or less, 2.6 or less, 2.5 or less, 2.4 or less, or 2.3 or less, may be 1.5 to 3.0, 1.8 to 3.0, or 1.8 to 2.8, or may include all possible combinations of the upper limits and the lower limits of the numerical ranges. When the inorganic particles satisfying the average particle size and the A/B area ratio described above, and also satisfying the (D95-D50)/D50 value are used, the effect of improving adhesive strength, heat resistance, and air permeability simultaneously may be better. In an exemplary embodiment, the D95 refers to a particle diameter of inorganic particles corresponding to 95% in terms of a volume-based cumulative fraction.

In an exemplary embodiment, the type of inorganic particles may be used without limitation as long as it satisfies the average particle size and the particle size distribution characteristics described above, and as a non-limiting example, may be one or two or more selected from metal oxides, metal hydroxide, metal carbides, metal nitrides, and metal carbonitrides, such as boehmite ($\gamma$-AlO(OH)), pseudo-boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

In an exemplary embodiment, a coating density of the ceramic layer may be 1.0 g/cm$^3$ or more, 1.1 g/cm$^3$ or more, 1.2 g/cm$^3$ or more, 2.0 g/cm$^3$ or less, 1.9 g/cm$^3$ or less, 1.8 g/cm$^3$ or less, or 1.7 g/cm$^3$ or less and may be 1.0 to 1.8 g/cm$^3$ or 1.2 to 1.8 g/cm$^3$.

In an exemplary embodiment, a thickness of the composite separator may be 1 $\mu$m to 200 $\mu$m, 2 $\mu$m to 200 $\mu$m, 5 $\mu$m to 200 $\mu$m, 5 $\mu$m to 150 $\mu$m, 5 $\mu$m to 100 $\mu$m, 5 $\mu$m to 50 $\mu$m, 5 $\mu$m to 30 $\mu$m, or 5 $\mu$m to 20 $\mu$m, or may include all possible combinations of the upper limits and the lower limits of the numerical ranges, but is not limited thereto.

In an exemplary embodiment, the ceramic layer may be coated on one or both surfaces of the porous substrate, and when the ceramic layer is coated on both surfaces of the porous substrate, the thicknesses of the ceramic layer coated on one surface and the other surface may be the same as or different from each other. Though it is not particularly limited, the total thickness of the ceramic layer according to an exemplary embodiment may be, for example, 0.1 $\mu$m to 10.0 $\mu$m, 0.5 $\mu$m to 10.0 $\mu$m, 1 $\mu$m to 10 $\mu$m, 1 $\mu$m to 8 $\mu$m, 1 $\mu$m to 5 $\mu$m, about 1.5 $\mu$m to 5 $\mu$m, 2 $\mu$m to 5 $\mu$m, 2 $\mu$m to 4 $\mu$m, preferably more than 0.5 $\mu$m and less than 5 $\mu$m, more preferably more than 0.5 $\mu$m and less than 3 $\mu$m, or a value between the numerical values. Since the composite separator according to an exemplary embodiment may implement excellent adhesive strength and heat resistance even when the ceramic layer is formed at a very small thickness, an electrochemical device employing the separator may satisfy safety, a high capacity, and high output characteristics simultaneously.

In an exemplary embodiment, the ceramic layer may include 90 to 99.9 wt%, 92 to 99.5 wt%, 92 to 99 wt%, 95 to 99 wt%, or 96 to 99 wt% of the inorganic particles with respect to the total weight of the ceramic layer, and when compared with the content of the inorganic particles in a conventional coating layer formed by connecting inorganic particles including the binder, more inorganic particles may be included, but since heat resistance and numerical stability are excellent, the coating layer (ceramic layer) may be formed at a smaller thickness.

In an exemplary embodiment, the ceramic layer may use the binder at 10 parts by weight or less, 8 parts by weight or less, 5 parts by weight or less, 3 parts by weight or less, 2 parts by weight or less, or 1 part by weight or less and 0.1 parts by weight or more, 0.5 parts by weight or more, 1 part by weight or more, 2 parts by weight or more, specifically 0.1 to 5 parts by weight, 1 to 5 parts by weight, or 1 to 3 parts by weight, with respect to 100 parts by weight of the inorganic particles, or at a content between the numerical ranges.

In an exemplary embodiment, the binder is not particularly limited as long as it is a common binder used in the art, and as a non-limiting example, may be one or two or more selected from (meth)acryl-based polymers, fluorine-based polymers, styrene-based polymers, vinylalcohol-based polymers, vinylester-based polymers, vinylpyrrolidone-based polymers, cellulose-based polymers, polyimide-based polymers, polyamide-based polymers, polyalkylene glycol, copolymers thereof, and heteropolymer blends thereof. The (meth)acryl-based polymer may be, as an example, selected from polyalkyl(meth)acrylate, poly(meth)acrylic acid, poly(meth)acrylamide, poly(meth)acrylonitrile, polyhydroxyethyl(meth)acrylate, copolymers thereof, or heteropolymer blends thereof. The styrene-based polymer may be, as an example, selected from polystyrene, polyalphamethylstyrene, polybromostyrene, copolymers thereof, or heteropolymer blends thereof. The vinylalcohol-based polymer may be, as an example, polyvinylalcohol or a copolymer including the same. The vinylester-based polymer may be, as an example, polyvinylalcohol or a copolymer including the same. The cellulose-based polymer may be, as an example, selected from cellulose, carboxymethyl cellulose, hydroxypropylmethyl cellulose, cellulose acetate, cellulose acetate propionate, or other substituted derivatives of cellulose acetate. The cellulose-based polymer may be a mixed thermoplastic polymer derived from cellulose.

In an exemplary embodiment, the binder may include a (meth)acryl-based polymer, a cellulose-based polymer, or combinations thereof.

Specifically, the binder may include polyacrylamide (PAAm), carboxymethyl cellulose, or a combination thereof, and specifically, may include a mixed binder of carboxymethyl cellulose and polyacrylamide, and this case may be preferred since an effect to be desired in the present invention may be further improved, but the present invention is not limited thereto. The combination of carboxymethyl cellulose and polyacrylamide may exhibit a synergistic effect, providing both enhanced adhesion strength and improved ionic conductivity of lithium ions compared to the use of each binder alone.

In an exemplary embodiment, when the binder includes polyacrylamide (PAAm), the weight average molecular weight of the polyacrylamide may be 100,000 g/mol to 300,000 g/mol, 150,000 to 250,000 g/mol, or 200,000 to 250,000 g/moll, and may include all possible combinations of the upper limits and the lower limits of the numerical ranges, but is not limited thereto. The weight average molecular weight may refer to a weight average molecular weight converted with a molecular weight calibration curve using a polystyrene standard sample measured by a GPC method. The GPC method may be carried out at an ambient temperature, and the sample is prepared by dissolving CMC at a concentration of approximately 0.1% w/v in a standard reference solvent. The prepared solution is then injected into the GPC instrument for analysis.

In an exemplary embodiment, when the binder includes carboxymethyl cellulose, the carboxymethyl cellulose may have the weight average molecular weight of 180,000 to 1,500,000 g/mol, 180,000 to 1,300,000 g/mol, or 190,000 to 1,000,000 g/mol, and may include all possible combinations of the upper limits and the lower limits of the numerical ranges. In addition, the carboxymethyl cellulose may have a degree of substitution of 0.6 to 1.2, 0.6 to 1.1, 0.6 to 1.0, 0.7 to 1.0, 0.8 to 1.0, or 0.9 to 1.0, and may include all possible combinations of the upper limits and the lower limits of the numerical ranges. The weight average molecular weight may refer to a weight average molecular weight converted with a molecular weight calibration curve using a polysaccharide standard sample measured by a GPC method.

Herein, the carboxymethyl cellulose (CMC) refers to a cellulose derivative which is etherized by substituting a hydroxyl group (-OH) with $-OCH_2COOH$ and/or $-OCH_2COO^-M^+$ in which $M^+$ is an alkali metal cation and may be selected from lithium (Li), sodium (Na), potassium (K), rubidium (Rb), cesium (Cs), and/or francium (Fr). In the present specification, the "degree of substitution (DS)" of carboxymethyl cellulose refers to the number of substituents included in one anhydrous glucose unit in a cellulose molecule, may be measured by a known or conventional method, and, for example, may be measured in accordance with ASTM D1439 and calculated by $^1$H-NMR or $^{13}$C-NMR analysis.

When the binder includes carboxymethyl cellulose and polyacrylamide, the carboxymethyl cellulose and the polyacrylamide may be used at a weight ratio of 10 to 50: 90 to 50 or 10 to 40: 90 to 60.

In an exemplary embodiment, heat shrinkage rates in MD and TD directions of the composite separator which is measured after the separator is allowed to stand at 150°C for 60 minutes may be both 5% or less, specifically 4% or less, less than 4%, 3% or less, less than 3%, 2.5% or less, less than 2.5%, 2.0% or less, or less than 2.0%.

In addition, in an exemplary embodiment, when a degree of foreign matter smeared on the surface of a cardboard is evaluated after a cardboard test of the composite separator, a ratio of an area occupied by the smeared foreign matter to an area of the cardboard may be 5% or less, specifically less than 5%, less than 4%, less than 3%, less than 2%, or less than 1.5%.

The cardboard test method involves placing a black cardboard and a rubber pad having a size of 2 cm × 10 cm sequentially on an upper surface of a ceramic layer of a composite separator (or composite porous substrate) specimen having a size of 5 cm × 10 cm, and pulling out the cardboard horizontally at a speed of 0.1 m/s for a distance of 60 mm in a state of applying a force of 10 N to the rubber pad using a pressing device to evaluate an area as a degree of foreign matter smeared on the surface of the cardboard, in which the foreign matter may be the constituent components of the ceramic layer, for example, the inorganic particles, the binder, or a combination thereof.

When the adhesive strength is evaluated using the cardboard test method as described above, measurement may be performed considering adhesive strength between the inorganic particles in the ceramic layer as well as adhesive strength between interfaces of the substrate and the ceramic layer, and from the results of the adhesive strength test, a heat shrinkage degree may be predicted more accurately as compared with a conventional peel test; the adhesive strength between the inorganic particles by the binder may also be reflected by the cardboard test. That is, when a ratio of an area occupied by the smeared foreign matter calculated by the cardboard test is less than 5%, less than 4%, less than 3%, less than 2%, or less than 1.5%, it means that adhesive strengths between the inorganic particles and between the inorganic particles and the substrate are all excellent, and the heat shrinkage phenomenon may be effectively suppressed.

As an example, a method such as a peeling test used for evaluating adhesive strength of an inorganic particle coating layer in a conventional composite separator is for evaluating adhesive strength between interfaces of the substrate and the inorganic particle coating layer, and the adhesive strength between the inorganic particles is difficult to be predicted, and the heat shrinkage characteristics of the separator may not be accurately predicted with the evaluated value.

In an exemplary embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, and/or polytetrafluoroethylene, and any two or more of them may be used. Among the porous substrates, a porous film is manufactured by a dry method or a wet method and known in the art, and thus, will not be described any more.

In an exemplary embodiment, the porous substrate may have a porosity of 20 to 60%, 30 to 60%, 30 to 50%, or 35 to 45%, but is not limited thereto.

In an exemplary embodiment, the porous substrate may have at least one polar functional group introduced by performing a hydrophilic surface treatment, the polar functional group may be selected from any one or more of a carboxyl group, an aldehyde group, a hydroxyl group, a carbonyl group, an amino group, and other common polar functional groups, and the hydrophilic surface treatment may be, as an example, a corona discharge treatment or a plasma discharge treatment, or a combination thereof, but is not limited thereto. This treatment may additionally improve the adhesive strength of between the ceramic layer and the porous substrate, and may be chosen according to surface property of the porous substrate.

In an exemplary embodiment, the thickness of the porous substrate is not particularly limited, and for example, may be 1 $\mu$m to 100 $\mu$m, 1 $\mu$m to 50 $\mu$m, 1 $\mu$m to 30 $\mu$m, 5 $\mu$m to 20 $\mu$m, or any value between the numerical values.

In the present invention, a method for manufacturing a composite separator, comprises a step of applying a coating slurry, that contains at least inorganic particles and a binder, on one or both surfaces of a porous substrate, preferably via bar coating; and subsequent drying of the applied coating slurry, preferably at a temperature range of 25 to 50 °C, more preferably at 50 °C. The inorganic particles in the coating slurry that is deposited on the porous substrate have an average particle diameter (D50), of 0.2 $\mu$m to 0.4 $\mu$m and satisfy a ratio (A/B) between an area (A) of a small particle diameter side and an area (B) of a large particle diameter side of 1.05 or more based on a maximum peak in a particle size distribution diagram of the inorganic particles.

In an exemplary embodiment, the method further comprises an initial step of introducing at least one polar functional group on one or both surfaces of the porous substrate through hydrophilic surface treatment, the at least one polar functional group being selected from any one or more of a carboxyl group, an aldehyde group, a hydroxyl group, a carbonyl group, an amino group, and preferably, the hydrophilic surface treatment being a corona discharge treatment or a plasma discharge treatment, or a combination thereof. Specifically, the corona surface treatment may be performed at a speed of 3 to 20 mpm (meter per minute) and the power density may be in a range of 0.5 to 5.0 W/m$^2$, more preferably in a range of 0.5 to 2.0 W/m$^2$ and even more preferably may be 2.0 W/m$^2$.

Another exemplary embodiment of the present invention provides a use of inorganic particles, which have an average particle diameter (D50) of 0.20 $\mu$m to 0.40 $\mu$m and which have a ratio (A/B) between an area (A) of a small particle diameter side and an area (B) of a large particle diameter side of 1.05 or more based on a maximum peak in a particle size distribution diagram of the inorganic particles, in the formation of a ceramic layer on one or both surfaces a porous substrate, optionally to produce a separator. The ceramic layer may optionally further comprise a binder.

The use according to this aspect can achieve improved technical effects, such as excellent adhesive strength between inorganic particles in the ceramic layer as well as adhesive strength between the interfaces of the substrate and the ceramic layer, and further excellent heat resistance, and effectively suppressing a heat shrinkage phenomenon.

The composition for forming a ceramic layer may be prepared by dispersing the binder and the inorganic particles and/or by adding a dispersing agent, and any agglomerated inorganic particles may be deagglomerated/dispersed using a ball mill for instance. The dispersing agent is not limited to a specific compound, and may be used if it does not make an impact on the separator performance.

The composition for forming a ceramic layer may further include a solvent, and the solvent may be water, lower alcohols such as ethanol, methanol, propanol and isopropanol, solvents such as dimethylformamide, acetone, tetrahydrofuran, diethyl ether, methylene chloride, N-ethyl-2-pyrrolidone, hexane, and cyclohexane; or a mixture thereof, but is not necessarily limited thereto.

In an exemplary embodiment, though a solid content of the composition for forming a ceramic layer is not particularly limited, it may be, for example, 1 to 50 wt%, 5 to 30 wt%, or 10 to 30 wt%, but is not limited thereto. In addition, the composition for forming a ceramic layer may have a viscosity based on a solid content of 25 wt% of 800 to 5,000 mPa·s, 800 to 4,000 mPa·s, 800 to 3,000 mPa·s, 1,000 to 3,000 mPa·s, 1,000 to 2,000 mPa·s or 1,200 to 1,500 mPa·s, at which it may be easier to form the ceramic layer.

In an exemplary embodiment, though a method for applying or coating the composition for forming a ceramic layer on the porous substrate is not particularly limited, for example, roll coating, pin coating, dip coating, bar coating, die coating, slit coating, or inkjet printing may be used.

In an exemplary embodiment, the drying may be performed by drying by warm air, hot air, or low-humidity air, vacuum drying, or irradiation with far infrared rays, electron beams, or the other drying methods. Since the drying temperature is not particularly limited, it may be appropriately adjusted depending on the experimental environment or the purpose, and for example, may be 30°C to 120°C, 30°C to 100°C, 50°C to 80°C, or 50°C to 70°C. The drying time is not particularly limited, but may be 30 seconds to 300 seconds, 60 seconds to 300 seconds, 100 seconds to 300 seconds, 150 seconds to 250 seconds, or about 180 seconds.

Another exemplary embodiment of the present invention provides an electrochemical device including the composite separator according to an exemplary embodiment, and the electrochemical device may be, as an example, a lithium secondary battery.

Specifically, the electrochemical device according to an exemplary embodiment includes a positive electrode, a negative electrode, and a composite separator, and the composite separator includes: a porous substrate; and a ceramic layer which is formed on one or both surfaces of the substrate and includes inorganic particles and a binder, wherein the inorganic particles have an average particle diameter (D50) of 0.20 $\mu$m to 0.40 $\mu$m and have a ratio (A/B) between an area (A) of a small particle diameter side and an area (B) of a large particle diameter side of 1.05 or more based on a maximum peak in a particle size distribution diagram of the inorganic particles.

Hereinafter, the electrochemical device according to an exemplary embodiment will be described using a lithium secondary battery as an example, but it may be manufactured with a structure known in the art using a common manufacturing method and common materials in the art, of course, except for including the composite separator according to an exemplary embodiment.

As an example, the lithium secondary battery may be manufactured according to a common manufacturing method of placing a negative electrode, the composite separator, and a positive electrode sequentially, assembling them, and injecting an electrolyte to complete the battery.

[Positive electrode]

The positive electrode may include a positive electrode current collector and a positive electrode mixed layer on at least one surface of the positive electrode current collector, the positive electrode may be manufactured by forming the positive electrode mixed layer by applying a positive electrode material slurry on one or both surfaces of the positive electrode current collector, drying, and rolling, and the positive electrode material slurry may include a positive electrode active material and a binder, and if necessary, may further include an electrically and/or ionically conductive material, a thickening agent, a surfactant, and other commonly used additives typical in the field of electrode manufacturing.

The positive electrode current collector may include a stainless steel, nickel, aluminum, titanium, or an alloy thereof, and may include aluminum or a stainless steel which is surface treated with carbon, nickel, titanium, or silver. As used herein, the term "surface-treated" refers to a state in which a coating or plating layer of carbon, nickel, titanium, or silver is formed on the surface, for example by coating, plating, or deposition. The thickness of the positive electrode current collector may be, for example, 10 $\mu$m to 50 $\mu$m, but is not limited thereto.

The positive electrode active material is a compound capable of reversibly intercalating and deintercalating lithium ions and may be used without limitation as long as it is commonly used in the art, and as a non-limiting example, it may be a composite oxide of lithium with a metal selected from cobalt (Co), manganese (Mn), nickel (Ni), iron (Fe), niobium (Nb), magnesium (Mg), copper (Cu), zinc (Zn), molybdenum (Mo), tantalum (Ta), tungsten (W), aluminum (Al), or a combination thereof.

In an exemplary embodiment, the positive electrode active material may be a lithium-nickel composite oxide, and the lithium-nickel composite oxide may further include one or two or more selected from cobalt, manganese, and aluminum.

In an exemplary embodiment, the positive electrode active material may include a lithium nickel-cobalt-manganese (NCM)-based composite oxide, and though the composition of the metal is not particularly limited, a high capacity (high-Ni) composition having a high nickel content may be used, and the content of Ni in the NCM-based lithium oxide (for example, a mole fraction of nickel of the total moles of nickel, cobalt, and manganese) may be 0.3 or more, 0.4 or more, 0.5 or more, 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95. The NCM-based composite oxide may be, for example, $LiNi_{0.33}Co_{0.33}Mn_{0.33}O_2$, $LiNi_{0.4}Co_{0.2}Mn_{0.4}O_2$, $LiNi_{05}Co_{0.2}Mn_{0.3}O_2$, $LiNi_{0.6}CO_{0.2}Mn_{0.2}O_2$, $LiNi_{0.7}Co_{0.15}Mn_{0.15}O_2$, $LiNi_{0.8}Co_{0.1}Mn_{0.1}O_2$, and other NCM-based mixed composite oxides of formula $Li_aNi_xCo_yMn_zO_2$, in which x + y + z = 1, but is not limited thereto.

In an exemplary embodiment, the positive electrode active material may be, for example, lithium cobalt oxide-based, lithium manganese oxide-based, lithium nickel oxide-based, lithium iron phosphate-based (LFP, for example,

LiFePO$_4$), lithium manganese phosphate-based (for example, LiMnPO$_4$), lithium cobalt phosphate-based (for example, LiCoPO$_4$), lithium iron pyrophosphate-based (for example, Li$_2$FeP$_2$O$_7$) materials, and other lithium containing transition metal oxides.

The positive electrode binder is not particularly limited as long as it is commonly used in the art, may include a nonaqueous binder and/or an aqueous binder or include a rubber-based binder and/or a fluorine-based binder, and for example, may be one or two or more selected from acryl-based polymers such as polyacrylate, polymethacrylate, polybutylacrylate, and polyacrylonitrile, fluorine-based polymers such as polyvinylidene fluoride, polyhexafluoropropylene, polyvinylidene fluoride-hexafluoropropylene, and polyvinylidene fluoride-trichloroethylene, polyvinyl acetate, polyethylene oxide, cellulose, modified cellulose, polyamide, polyacrylamide, rubber, elastomer, and other latex binders suitable as a positive electrode binder, but is not limited thereto.

The conductive material may be added for increasing conductivity of the positive electrode mixed layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as LaSrCoO$_3$ and LaSrMnO$_3$, and other electron and/or ion conductive inorganic compounds, but is not limited thereto. As used herein, the term "dot-shaped conductive material" refers to a general spherical or particulate form of conductive material.

[Negative electrode]

The negative electrode may include a negative electrode current collector and a negative electrode mixed layer on at least one surface of the negative electrode current collector, the positive electrode may be manufactured by forming the negative electrode mixed layer by applying a negative electrode material slurry on one or both surfaces of the positive electrode current collector, drying, and rolling, and the negative electrode material slurry may include a negative electrode active material and a binder, and if necessary, may further include an electrically and/or ionically conductive material, a thickening agent, a surfactant, and other common additives in the field of electrode manufacturing.

The negative electrode current collector may include a copper foil, a nickel foil, a stainless steel foil, a titanium foil, a nickel foam, a copper foam, a polymer substrate coated with a conductive metal, and other transition metal based substrates such as stainless steel felt or nickel felt. A thickness of the negative electrode current collector may be, for example, 10 $\mu$m to 50 $\mu$m, but is not limited thereto.

The negative electrode active material is a material capable of adsorbing and desorbing lithium ions and may be used without limitation as long as it is commonly used in the art, and as a non-limiting example thereof, carbon-based materials such as crystalline carbon, amorphous carbon, a carbon composite, and carbon fiber; lithium metal; lithium alloy; silicon (Si)-containing materials, tin (Sn)-containing materials, and other mono- or multimetallic alloys may be used.

An example of the amorphous carbon may include hard carbon, soft carbon, coke, mesocarbon microbeads (MCMB), mesophase pitch-based carbon fibers (MPCF), and other nanostructured carbon-based materials, and an example of the crystalline carbon may include graphite-based carbon such as natural graphite, artificial graphite, graphitized coke, graphitized MCMB, and graphitized MPCF.

An element included in the lithium alloy may include aluminum, zinc, bismuth, cadmium, antimony, silicon, lead, tin, gallium, indium, boron, germanium, and/or a transition metal.

The silicon-containing material may provide more increased capacity characteristics. The silicon-containing material may include Si, SiO$_x$ (0<x$\leq$2), metal-doped SiO$_x$ (0<x$\leq$2), a silicon-carbon composite, and other Si-based composites doped with one or more main group or transition metals, the metal may include lithium and/or magnesium, and the metal-doped SiO$_x$ (0<x$\leq$2) may include a metal silicate. The materials described above which may be used in manufacture of the positive electrode may be used as the binder, the conductive material, and the thickening agent of the negative electrode.

The negative electrode binder is not particularly limited as long as it is commonly used in the art, and may be rubber-based binders such as a styrene-butadiene rubber (SBR)-based binder, carboxymethyl cellulose (CMC), polyacrylic acid, poly(3,4 ethylenedioxythiophene) (PEDOT)-based binders, and other polymers such as polyvinylidene fluoride (PVDF) or poly(hydroxybutyrate-co-hydroxyvalerate) (PHBV).

[Electrolyte]

In an exemplary embodiment, the electrolyte may be a nonaqueous electrolytic solution, and the nonaqueous electrolytic solution may include a lithium salt as an electrolyte and an organic solvent.

The lithium salt is represented by, for example, Li$^+$X$^-$, and an anion of the lithium salt (X$^-$) may be exemplified by F$^-$, Cl$^-$, Br$^-$, I$^-$, NO$_3^-$, N(CN)$_2^-$, BF$_4^-$, ClO$_4^-$, PF$_6^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$,

$CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and other single negatively charged ions.

The organic solvent sufficiently dissolves the lithium salt and the additive and may include an organic compound having no reactivity in a battery. The organic solvent may include, for example, at least one of carbonate-based solvents, ester-based solvents, ether-based solvents, ketone-based solvents, alcohol-based solvents, and aprotic solvents. The organic solvent may be, for example, one or two or more selected from propylene carbonate, ethylene carbonate, butylene carbonate, diethyl carbonate, dimethyl carbonate, ethyl methyl carbonate, methylpropyl carbonate, ethylpropyl carbonate, dipropyl carbonate, vinylene carbonate, methyl acetate, ethyl acetate, n-propyl acetate, 1,1-dimethylethyl acetate, methyl propionate, ethyl propionate, fluoroethyl acetate, difluoroethyl acetate, trifluoroethyl acetate, dibutylether, tetraethylene glycol dimethylether, diethylene glycol dimethylether, dimethoxyethane, tetrahydrofuran, 2-methyltetrahydrofuran, ethyl alcohol, isopropyl alcohol, dimethylsulfuroxide, acetonitrile, diethoxyethane, sulfolane, $\gamma$-butyrolactone, propylene sulfite, and other low molecular weight and/or cyclic compounds.

Hereinafter, the exemplary embodiments described above will be described in detail through the following examples. However, the following examples are only for description, and do not limit the scope of a right.

**[Method for measuring physical properties]**

**1) Particle size of inorganic particles**

A sample was collected in accordance with the standard of ISO 13320-1, the particle size distribution was analyzed via laser diffraction using S3500 available from MICROTRAC, and a particle size distribution diagram of volume% in accordance with the particle diameter was obtained. The particle diameter (Dn) of particles corresponding to n% as a volume-based cumulative fraction was derived from the particle size distribution diagram, and the particle diameter of the sample particles to be measured corresponding to 50% as the volume-based cumulative fraction was set as an average particle diameter (D50).

In addition, the area (A) of a small particle diameter side and the area (B) of a large particle diameter side were obtained based on the maximum peak of the particle size distribution diagram obtained by the above method. Specifically, in the particle size distribution diagram drawn in order of particle diameter from small to large from left to right of the x-axis as in FIG. 1, the area from the starting point of the particle size distribution diagram to the x-axis of the maximum peak was set as A, and the area from the x-axis of the maximum peak to the end point of the particle size distribution diagram was set as B. The maximum peak refers the peak with the largest intensity (y-axis) among any of the peaks acquired within the investigated particle size range (x-axis). For example, in case of a bi- or multimodal particle size distribution, the maximum peak of the particle size distribution is represented by the largest absolute intensity value.

**2) Thickness**

A composite separator was laminated in 10 layers, the thickness was measured at ambient temperature and atmospheric pressure by Mitutoyo (ID-C112X) to derive an average thickness of the 10 layers of the composite separator, and the average thickness was divided by 10 again to determine the thickness of the composite separator. A value obtained by subtracting the thickness of a porous substrate from the thickness of the composite separator was set as the total thickness of the ceramic layer; the thickness of the porous substrate may be measured with the same method.

The thickness of the porous substrate was obtained by laminating only the porous substrate in 10 layers, measuring the thickness by Mitutoyo (ID-C112X) to derive the average thickness of the 10 layers, and dividing the average thickness by 10. In the case of after forming the ceramic layer, the ceramic layer was detached, sufficient drying was performed, and the average thickness of the porous substrate from which the ceramic layer was detached was derived by the method described above.

**3) Coating density of ceramic layer**

The coating density of the ceramic layer was calculated by the following equation, and the weight of the ceramic layer was set as a value obtained by subtracting the weight of the porous substrate from the weight of the composite separator. The composite separator was cut into a size of 100 mm×100 mm, two sheets overlapped, the weight was measured 5 times to determine the average weight of the two sheets of the composite separator, the average weight was divided again by 2 to determine the weight of the composite separator, and the weight of the porous substrate was determined by the same method as the method for measuring the weight of the composite separator using only the porous substrate cut into the size of 100 mm×100 mm.

Coating density of ceramic layer = (weight of ceramic layer/ thickness of ceramic layer) / area

**4) Adhesive strength**

[Cardboard test]

A composite separator was cut into a size of 5 cm × 10 cm to prepare a specimen, and a black cardboard and a rubber pad having a size of 2 cm × 10 cm were placed sequentially on the ceramic layer of the composite separator specimen. The cardboard was pulled out horizontally at a speed of 0.1 m/s for a distance of 60 mm in a state of applying a force of 10 N to the rubber pad using a pressing device, adhesive strength was evaluated depending on a degree of foreign matter smeared on the surface of the cardboard, and the foreign matter may be constituent components of the ceramic layer, for example, inorganic particles, a binder, or a combination thereof.

[Evaluation of degree of smeared foreign matter]

After the cardboard test, the surface of the cardboard was photographed with an optical camera and imaged, and an area of the smeared foreign matter was measured. Specifically, an indirect lighting was installed with an LED lamp in the visible light range having a 60° slope, and the cardboard was photographed with a 640 M pixel optical camera at a height of 40 cm from the sample (cardboard). The photographed cardboard image was loaded with an Image J program, only an area through which the separator and the rubber pad were passed was selected and cut using a crop function, an image file format of the cut area was converted into a 8 bit image, and a Sharpen filter was applied to the image to adjust the brightness and the contrast of the image so that it is easy to distinguish between the cardboard and foreign matter, which was detached from the surface of the composite separator and appeared white or highly bright in color being clearly distinguishable on the black cardboard.

A threshold was applied to the image to convert it into a binary image, an Analyze Particles function was executed to calculate a ratio of an area occupied by the (white or highly bright) foreign matter to the total area, and adhesive strength was evaluated based on the following criteria:

A:

$$< 1.5\%$$

B:

$$1.5\% - 5\%$$

C:

$$> 5\%$$

**5) Heat shrinkage rate**

The heat shrinkage rate of the composite separator was measured based on the ASTM D1204 standard, but the following method was used. Lattice points were marked at 2 cm intervals on a square with one side of 10 cm on the composite separator specimen, and one side of the square was the transverse direction (TD), and the other one was the machine direction (MD). The specimen was placed right in the center, 5 sheets of paper were placed on and under the specimen, respectively, the four sides of the paper were taped, and the taped specimen was allowed to stand in a hot air-drying oven at 150°C for 60 minutes. Thereafter, the specimen was taken out, and the separator was observed with a camera to calculate the shrinkage rate in the machine direction (MD) and the shrinkage rate in the transverse direction (MD) at an ambient temperature, which are shown in the following Table 2.

MD heat shrinkage rate (%) = (length in MD before heating - length in MD after heating)/length in MD before heating × 100 TD heat shrinkage rate (%) = (length in TD before heating - length in TD after heating)/length in TD before heating × 100

**[Example** 1]

2 parts by weight of 1,2-benzisothiazolin-3-one (DIO2) as a dispersing agent was mixed with 100 parts by weight of boehmite (D95:0.61 $\mu$m, A/B:1.07) having an average particle diameter (D50) of 0.21 $\mu$m in water to prepare a slurry having a solid content of 45 wt%. The thus prepared slurry and carboxymethyl cellulose (CMC) having a degree of substitution of 0.9 and a weight average molecular weight of 200,000 g/mol were mixed so that CMC was 3 parts by weight with respect to 100 parts by weight of the boehmite, and the mixture was diluted with water so that the solid content was 25 wt% to prepare a composition for forming a ceramic layer.

Both surfaces of a polyethylene film having a thickness of 9 $\mu$m (porosity: 35%-45%, SKIET) were corona discharged (power density: 2 W/m$^2$) to introduce a surface polar group, and the corona surface treatment at this time was performed at a speed of 5 (meter per minute). The composition for forming a ceramic layer was applied on both surfaces of the corona surface-treated polyethylene film, bar-coated, and dried at 50°C to manufacture a composite separator having ceramic layers at the same thickness formed on both surfaces.

**[Example 2]**

The process was performed in the same manner as in Example 1, except that boehmite (D95:0.99 $\mu$m, A/B:1.17) having an average particle diameter (D50) of 0.30 $\mu$m was used.

**[Example 3]**

The process was performed in the same manner as in Example 1, except that boehmite (D95:1.13 $\mu$m, A/B:1.12) having an average particle diameter (D50) of 0.37 $\mu$m was used.

**[Example 4]**

The process was performed in the same manner as in Example 1, except that a mixture of carboxymethyl cellulose (CMC) having a degree of substitution of 0.9 and a weight average molecular weight of 200,000 g/mol and polyacrylamide (PAAm) (Mw 200,000 g/mol, sigma aldrich) mixed at a weight of 10:90 was used as the binder.

**[Example 5]**

The process was performed in the same manner as in Example 4, except that boehmite (D95:0.99 $\mu$m, A/B:1.17) having an average particle diameter (D50) of 0.30 $\mu$m was used.

**[Example 6]**

The process was performed in the same manner as in Example 4, except that boehmite (D95:1.13 $\mu$m, A/B:1.12) having an average particle diameter (D50) of 0.37 $\mu$m was used.

**[Example 7]**

The process was performed in the same manner as in Example 4, except that boehmite (D95:0.87 $\mu$m, A/B:1.09) having an average particle diameter (D50) of 0.32 $\mu$m was used.

**[Comparative Example 1]**

The process was performed in the same manner as in Example 1, except that boehmite (D95:1.50 $\mu$m, A/B:1.09) having an average particle diameter (D50) of 0.50 $\mu$m was used.

**[Comparative Example 2]**

The process was performed in the same manner as in Example 1, except that boehmite (D95:1.75 $\mu$m, A/B:0.97) having an average particle diameter (D50) of 0.64 $\mu$m was used.

**[Comparative Example 3]**

The process was performed in the same manner as in Example 1, except that boehmite (D95:0.31 $\mu$m, A/B:1.15) having an average particle diameter (D50) of 0.10 μm was used.

**[Comparative Example 4]**

The process was performed in the same manner as in Example 1, except that boehmite (D95:0.77 μm, A/B:1.04) having an average particle diameter (D50) of 0.27 μm was used.

**[Comparative Example 5]**

The process was performed in the same manner as in Example 1, except that boehmite (D95:0.91 μm, A/B:1.02) having an average particle diameter (D50) of 0.38 μm was used.

[Table 1]

| | Particle size of inorganic particles | | |
| --- | --- | --- | --- |
| | D50 (μm) | (D95-D50)/D50 | A/B |
| Example 1 | 0.21 | 1. 90 | 1.07 |
| Example 2 | 0.30 | 2.30 | 1.17 |
| Example 3 | 0.37 | 2.05 | 1.12 |
| Example 4 | 0.21 | 1. 90 | 1.07 |
| Example 5 | 0.30 | 2.30 | 1.17 |
| Example 6 | 0.37 | 2.05 | 1.12 |
| Example 7 | 0.32 | 1.72 | 1.09 |
| Comparative Example 1 | 0.50 | 2.00 | 1.09 |
| Comparative Example 2 | 0.64 | 1.73 | 0.97 |
| Comparative Example 3 | 0.10 | 2.1 | 1.15 |
| Comparative Example 4 | 0.27 | 1.85 | 1.04 |
| Comparative Example 5 | 0.38 | 1.39 | 1.02 |

[Table 2]

| | Total thickness (μm) of ceramic layer | Coating density (g/cm$^3$) | Adhesive strength | Heat shrinkage rate (%) | |
| --- | --- | --- | --- | --- | --- |
| | | | | MD | TD |
| Example 1 | 2.1 | 1.2792 | B | 1.9 | 1.5 |
| Example 2 | 2.2 | 1.3404 | A | 1.8 | 1.5 |
| Example 3 | 2.1 | 1.3892 | A | 1.5 | 1.3 |
| Example 4 | 2.1 | 1.5884 | B | 1.9 | 1.5 |
| Example 5 | 2.2 | 1.6659 | B | 2.0 | 1.0 |
| Example 6 | 2.1 | 1.6990 | A | 1.8 | 1.0 |
| Example 7 | 2.1 | 1.2610 | B | 2.4 | 2.0 |
| Comparative Example 1 | 2.1 | 1.1342 | A | 15 | 14 |
| Comparative Example 2 | 2.2 | 0.6633 | A | 45 | 40 |
| Comparative Example 3 | 2.1 | 1.2432 | C | 50 | 49 |
| Comparative Example 4 | 2.2 | 1.2653 | C | 7.2 | 6.2 |
| Comparative Example 5 | 2.1 | 1.1680 | B | 8.0 | 9.2 |

Referring to Table 1, it was found that the composite separator according to an exemplary embodiment of the present invention had excellent adhesive strength between inorganic particles in the ceramic layer as well as adhesive strength between the interfaces of the substrate and the ceramic layer, had excellent heat resistance, and effectively suppressed a heat shrinkage phenomenon, even though the thickness of the ceramic layer in the separator is sufficiently thin. An electrochemical device employing the composite separator according to an exemplary embodiment may reveal improved heat resistance and operational safety, and may further achieve increased capacity and higher output.

On the other hand, the composite separators of the comparative example using the inorganic particles which were out of the range of the average particle diameter (D50) of 0.20 $\mu$m to 0.40 $\mu$m or had the ratio (A/B) between the area (A) of the small particle diameter side and the area (B) of the large particle diameter side of less than 1.05 based on the maximum peak of the particle size distribution diagram were confirmed to have greatly reduced adhesive strength and inferior heat shrinkage rates.

The composite separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and other renewable energy-powered devices for preventing climate change by suppressing air pollution and greenhouse gas emissions.

The composite separator according to an exemplary embodiment may satisfy all of excellent mechanical and thermal stability and ion conduction properties, especially enhanced Li ion mobility and/or conduction properties, for example, in the range of about 0.5 mmS/cm to about 1 mmS/cm. Specifically, the composite separator according to an exemplary embodiment includes a porous substrate and a ceramic layer having pores formed between inorganic particles which are connected and fixed by a binder, and the composite separator may secure excellent heat resistance even when the ceramic layer is formed at a very small thickness and has excellent adhesive strength between the inorganic particles and between the inorganic particles (and thus the coating layer formed by the ceramic layer) and the substrate, so that the separator may effectively suppress a desorption or delamination phenomenon of inorganic particles and a shrinkage phenomenon at a high temperature. In particular, the binder not only contributes to adhesion between the inorganic particles, but also improves the interfacial adhesion between the ceramic layer and the porous substrate, thereby further enhancing the mechanical integrity of the separator. Simultaneously, the composite separator according to an exemplary embodiment may implement excellent air permeability and ion conduction properties. Particularly, enhanced Li ion mobility and/or Li ion conduction properties may be achieved by the composite separator according to an exemplary embodiment.

The electrochemical device employing the composite separator according to an exemplary embodiment may achieve improved operational safety, high capacity, and high output characteristics simultaneously.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

**Claims**

1. A composite separator comprising: a porous substrate; and a ceramic layer which is formed on one or both surfaces of the substrate and includes inorganic particles and a binder,
   wherein the inorganic particles have an average particle diameter (D50), measured via laser diffraction, of 0.20 $\mu$m to 0.40 $\mu$m and have a ratio (A/B) between an area (A) of a small particle diameter side and an area (B) of a large particle diameter side of 1.05 or more based on a maximum peak in a particle size distribution diagram of the inorganic particles.

2. The composite separator according to claim 1, wherein the inorganic particles have a (D95-D50)/D50 value of 1.8 to 2.5 in the particle size distribution diagram.

3. The composite separator according to claim 1 or 2, wherein the ratio (A/B) between the area (A) of the small particle diameter side and the area (B) of the large particle diameter is 1.05 to 1.3 based on the maximum peak in the particle size distribution diagram of the inorganic particles.

4. The composite separator according to any one of claims 1 to 3, wherein 0.1 to 10 parts by weight of the binder is included with respect to 100 parts by weight of the inorganic particles.

5. The composite separator according to any one of claims 1 to 4, wherein the inorganic particles are one or two or more

selected from boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

6. The composite separator according to any one of claims 1 to 5, wherein the binder is one or two or more selected from (meth)acryl-based polymers, fluorine-based polymers, styrene-based polymers, vinylalcohol-based polymers, vinylester-based polymers, vinylpyrrolidone-based polymers, cellulose-based polymers, polyimide-based polymers, polyamide-based polymers, polyalkylene glycol, copolymers thereof, and heteropolymer blends thereof, preferably wherein the binder includes polyacrylamide, carboxymethyl cellulose, or a combination thereof.

7. The composite separator according to claim 6 , wherein the binder includes carboxymethyl cellulose having a weight average molecular weight of 180,000 or more and a degree of substitution of 0.6 to 1.2.

8. The composite separator according to any one of claims 1 to 7, wherein the porous substrate comprises at least one polar functional group introduced through hydrophilic surface treatment, optionally wherein the at least one polar functional group is selected from any one or more of a carboxyl group, an aldehyde group, a hydroxyl group, a carbonyl group, an amino group, preferably wherein the hydrophilic surface treatment is a corona discharge treatment or a plasma discharge treatment, or a combination thereof.

9. The composite separator according to any one of claims 1 to 8, wherein a coating density of the ceramic layer is 1.2 to 1.8 g/cm$^3$, and/or wherein a total thickness of the ceramic layer is 0.5 $\mu$m to 10 $\mu$m, preferably more than 0.5 $\mu$m and less than 5 $\mu$m, and more preferably more than 0.5 $\mu$m and less than 3 $\mu$m.

10. The composite separator according to any one of claims 1 to 9, wherein a thickness of the composite separator is 1 to 100 $\mu$m.

11. The composite separator according to any one of claims 1 to 10, wherein when the composite separator is subjected to a cardboard test and a degree of foreign matter smeared on a surface of a cardboard is evaluated, a ratio of an area occupied by the smeared foreign matter to the area of the cardboard is 5% or less:
[Cardboard test]
a black cardboard and a rubber pad having a size of 2 cm $\times$ 10 cm are sequentially placed on a ceramic layer of a composite separator specimen having a size of 5 cm $\times$ 10 cm, the cardboard is pulled out horizontally at a speed of 0.1 m/s for a distance of 60 mm while a force of 10 N is applied to the rubber pad using a pressing device, and a degree of foreign matter smeared on the surface of the cardboard is tested.

12. The composite separator according to any one of claims 1 to 11, wherein the composite separator has heat shrinkage rates in the machine direction (MD) and the transverse direction (TD), which are measured after the composite separator is allowed to stand at 150°C for 60 minutes, of both 4% or less.

13. A method for manufacturing a composite separator, comprising:

applying a coating slurry containing inorganic particles and a binder on one or both surfaces of a porous substrate; drying of the applied coating slurry,
wherein the inorganic particles have an average particle diameter (D50), measured via laser diffraction, of 0.2 $\mu$m to 0.4 $\mu$m and satisfy a ratio (A/B) between an area (A) of a small particle diameter side and an area (B) of a large particle diameter side of 1.05 or more based on a maximum peak in a particle size distribution diagram of the inorganic particles.

14. Use of inorganic particles, which have an average particle diameter (D50), measured via laser diffraction, of 0.20 $\mu$m to 0.40 $\mu$m and which have a ratio (A/B) between an area (A) of a small particle diameter side and an area (B) of a large particle diameter side of 1.05 or more based on a maximum peak in a particle size distribution diagram of the inorganic particles, in the formation of a ceramic layer optionally with a binder, on one or both surfaces a porous substrate, optionally to produce a separator.

15. An electrochemical device comprising a positive electrode, a negative electrode, and the composite separator of any one of claims 1 to 12, optionally wherein the electrochemical device is a secondary lithium battery, and/or wherein the electrochemical device is used in electric vehicles, battery charging stations, and solar power generations and wind power generations.

FIG. 1

Europäisches
Patentamt
European
Patent Office
Office européen
des brevets

## EUROPEAN SEARCH REPORT

**Application Number**

EP 25 21 0271

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/127264 A1 (KIM GAIN [KR] ET AL) 23 April 2020 (2020-04-23) | 1-6,9-15 | INV. H01M50/403 |
| Y | * example 1 * | 8 | H01M50/434 |
| A | | 7 | H01M50/443 |
| | ----- | | H01M50/451 |
| Y | EP 4 451 452 A1 (CONTEMPORARY AMPEREX TECHNOLOGY HONG KONG LTD [HK]) 23 October 2024 (2024-10-23) | 8 | H01M50/489 |
| A | * example 1 * | 1-7,9-15 | |
| | ----- | | |

TECHNICAL FIELDS
SEARCHED (IPC)

H01M

The present search report has been drawn up for all claims

| Place of search | Date of completion of the search | Examiner |
|---|---|---|
| The Hague | 5 March 2026 | Saad-Guermeche, S |

EPO FORM 1503 03.82 (P04C01)

## ANNEX TO THE EUROPEAN SEARCH REPORT
## ON EUROPEAN PATENT APPLICATION NO.

EP 25 21 0271

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2026

| Patent document cited in search report | Publication date | Patent family member(s) | Publication date |
|---|---|---|---|
| US 2020127264 A1 | 23-04-2020 | KR 20190004158 A | 11-01-2019 |
| | | US 2020127264 A1 | 23-04-2020 |
| | | US 2025149733 A1 | 08-05-2025 |
| | | WO 2019009564 A1 | 10-01-2019 |
| EP 4451452 A1 | 23-10-2024 | CN 118451597 A | 06-08-2024 |
| | | EP 4451452 A1 | 23-10-2024 |
| | | JP 2025502302 A | 24-01-2025 |
| | | KR 20240121318 A | 08-08-2024 |
| | | US 2024372217 A1 | 07-11-2024 |
| | | WO 2024011404 A1 | 18-01-2024 |

EPO FORM P0459

For more details about this annex : see Official Journal of the European Patent Office, No. 12/82

**EP 4 742 408 A1**

**Patent documents cited in the description**

- KR 1020230144943 A